# EUROPÄISCHE PATENTSCHRIFT

(11) **EP 2 315 720 B1**
(45) Veröffentlichungstag und Bekanntmachung des Hinweises auf die Patenterteilung: **13.03.2013**
(21) Anmeldenummer: 09781803.3
(22) Anmeldetag: 13.08.2009
(51) Int. Cl.: C01B 33/141, C01B 33/193, C09C 1/30

(54) **WÄSSRIGE DISPERSIONEN HYDROPHOBER KIESELSÄUREN**
AQUEOUS DISPERSIONS OF HYDROPHOBIC SILICIC ACIDS
DISPERSIONS AQUEUSES D'ACIDES SILICIQUES HYDROPHOBES

(30) Priorität: 22.08.2008 DE 102008041466
(43) Veröffentlichungstag der Anmeldung: 04.05.2011
(73) Patentinhaber: Wacker Chemie AG, 81737 München (DE)
(72) Erfinder: GOTTSCHALK-GAUDIG, Torsten, 84561 Mehring (DE)
(74) Vertreter: Gössmann, Christoph Tassilo
(86) Internationale Anmeldenummer: PCT/EP2009/060497
(87) Internationale Veröffentlichungsnummer: WO 2010/020582

(56) Entgegenhaltungen:
- EP-A- 1 114 794
- EP-A- 1 801 073
- DE-A1-102005 012 409
- G. COUARRAZE ET.AL.: "Determination of molar mass polydispersity index from dynamic rheological measurements" RHEOLOGICA ACTA, Bd. 25, 1986, Seiten 494-500, XP002557797

## Beschreibung

Die Erfindung betrifft wäßrige Dispersionen hydrophober Kieselsäuren, ein Verfahren zu deren Herstellung, deren Einsatz zur Stabilisierung von Emulsionen und deren Verwendung.

Wäßrige Dispersionen von Kieselsäuren finden Einsatz im chemisch-mechanischen Planarisieren von Metalloberflächen z.B. im Halbleiterbereich, zur Papierbeschichtung z.B. von Ink-jet-Papieren, als rheologisches Additiv bzw. Antisedimentationsmittel bei wasserbasierenden Farben, Lacken und Kleb- und Dichtstoffen, bei der Herstellung von Latexprodukten wie Handschuhe, bei der Herstellung von Gelbatterien und bei der Stabilisierung von emulgatorfreien Pickering Emulsionen.

Die Fließeigenschaften und die kolloidale Stabilität wäßriger Dispersionen von Kieselsäuren werden maßgeblich durch den pH-Wert beeinflußt.

So zeigen wäßrige Dispersionen von Kieselsäuren insbesondere bei pH-Werten im neutralen Bereich hohe Viskositäten und eine inhärente kolloidale Instabilität.

Gewöhnlich werden wäßrige Kieselsäure-Dispersionen durch Veränderung der Oberflächenladung der Kieselsäurepartikel elektrostatisch stabilisiert.

So ist aus der Schrift DE 40 06 392 bekannt, daß sich kolloidal stabile und niedrigviskose Dispersion von hydrophilen Kieselsäuren durch Einstellen eines pH-Werts im basischen Bereich erhalten lassen.
Nachteilig ist hier, daß bei pH-Werten im Bereich des Neutralpunktes, d.h. bei einem pH von ca. 7, wie sie zahlreiche Anwendungen erfordern, besagte Dispersionen einen unkontrollierten Anstieg der Viskosität oder sogar Gelbildung aufweisen, wie beispielsweise gezeigt in D. Heath, T. F. Tadros, J. Colloid Interface Sci. 1983, 93, 320. Ein weiteres Absenken des pH-Werts über den Neutralpunkt hinaus führt dann zu einem erneutem Absinken der Viskosität. Dieses Verhalten wäßriger Dispersionen hydrophiler Kieselsäuren hat den Nachteil, daß bereits kleine Änderungen des pH-Werts, wie sie beispielsweise beim Formulieren von komplexen Mischungen auftreten können, zu nicht kontrollierbaren Schwankungen der Fleißeigenschaften der Formulierung führen können.

Ferner ist aus den Schrift EP 1 124 693 A1, EP 736489 bzw. DE 102 38 463 A1 die Stabilisierung wäßriger Kieselsäuredispersionen mit Aluminiumsalzen und aus US 2,892,797 durch Aluminate bekannt.
Nachteilig ist hier, daß diese Dispersionen im Bereich des Neutralpunktes, d.h. bei pH 7 zur Instabilität neigen, was zu einem unkontrollierten Anstieg der Viskosität oder sogar zur Vergelung führen kann. Ferner kann der Zusatz von Aluminiumsalzen z.B. bei bestimmten Anwendungen wie z.B. bei der Beschichtung von Ink-jet-Papieren und bei der Rheologiesteuerung von wasserbasierenden Epoxyharzen negative Auswirkungen haben.

Nachteilig ist der Einsatz von hydrophilen Kieselsäuren zur Rheologiekontrolle wäßriger Systeme zudem durch die ausgeprägte Tendenz hydrophiler Kieselsäuren zur irreversiblen Adsorption von Oligomeren oder Polymeren wie z.B. üblicherweise eingesetzten Bindemitteln in wasserbasierenden Beschichtungen, Dicht- und Klebstoffen. Dies führt zu einer nur schwer zu kontrollierenden Änderung der Benetzungseigenschaften der Kieselsäurepartikel und zu einer unzureichenden Lagerstabilität in Folge von Polymerverbrückung oder sterischer Stabilisierung.

Aus DE 102005012409 ist die Herstellung wäßriger Dispersion teilhydrophober Kieselsäuren, d.h. von Kieselsäuren mit einer Silanolgruppendichte von 0,9 bis 1,7 Silanolgruppen / nm², einem Kohlenstoffgehalt von 0,1 bis 2% und einer Methanolzahl von kleiner 30, beschrieben. Es zeigte sich, daß diese Dispersionen einen nennenswerten Anteil unzureichend dispergierter Partikel aufweisen. Diese können in Anwendungen wie z.B. Beschichtungen oder Dichtstoffen zu einer Störung der Oberfläche und somit zu einem schlechten optischen Erscheinungsbild führen.

Aus EP 0367934B1 ist eine wäßrige Dispersion hydrophober Kieselsäure bekannt. Diese weist jedoch bei technisch relevanten Kieselsäurefüllgraden über 10% eine hohe Viskosität und Pastenbildung auf und ist für den industriellen Einsatz ungeeignet.

Die Herstellung wäßriger Dispersionen hydrophober Kieselsäuren unter Zusatz von organischen Lösungsmitteln, Emulgatoren, Netzmitteln oder Schutzkolloiden ist beispielsweise aus DE 10316661 ebenfalls bekannt. Nachteilig ist dabei, daß diese Additive häufig die Benetzungseigenschaften von festen Substraten beinträchtigen bzw. die Stabilität von Formulierungen beinträchtigen.

Aufgabe der Erfindung ist es, die Nachteile des Standes der Technik zu überwinden, insbesondere hydrophobe Kieselsäuren mit hohen Feststoffgehalten in einer Wasserphase stabil zu dispergieren.

Gegenstand der Erfindung ist ein Verfahren nach Anspruch 1

Überraschenderweise, und in keiner Weise durch den Fachmann vorauszusehen, wurde nun gefunden, daß sich durch Dispergierung die hydrophoben Kieselsäuren in eine Wasserphase bei einem pH-Wert von 0 bis 6 eindispergiert werden und in einem weiteren Schritt der pH-Wert der Kieselsäuredispersion auf einen pH Wert von 7 - 12 durch Zugabe von Base eingestellt wird, Dispersionen hydrophober Kieselsäure mit hohen Feststoffgehalten und einer engen Verteilungsbreite des hydrodynamischen Äquivalentdurchmessers der Kieselsäureaggregate erhalten lassen, die in dem pH-Wertbereich von 7 - 12 eine ausgezeichnete kolloidale Stabilität auch nach langer Lagerzeit aufweisen und im pH-Wertbereich von 5 - 8 kein lokales oder absolutes Viskositätsmaximum aufweisen, d.h. eine stetige Zunahme der Viskosität zeigen.

Kolloidal stabil bedeutet dabei, daß die Dispersionen während der Lagerung von 4 Woche keine merkliche Zunahme der Viskosität zeigen und der mittlere Partikeldurchmesser gemessen mittel dynamischer Lichtstreuung konstant bleibt. Kolloidale Stabilität ist Voraussetzung für eine entsprechende Lagerfähigkeit. Wäßrige Dispersionen, die im Laufe der Lagerung einen unkontrollierten Anstieg der Viskosität oder sogar Vergelung zeigen, sind für eine weitere Verarbeitung häufig nicht mehr geeignet, da Verarbeitungsprozesse wie Pumpenförderung oder Rühren durch hohe Viskositäten beeinträchtigt werden.

Eine stetige Zunahme der Viskosität mit abnehmenden pH-Wert ist gegenüber der nach dem Stand der Technik bekannten schwankenden pH-Abhängigkeit von Vorteil, da beim Einstellen eines bestimmten pH-Werts nicht Bereiche unerwünschter und teilweise unkontrollierbarer hoher Viskosität und damit erschwerter Handhabbarkeit auftreten.

Unter hydrophober Kieselsäure sind in diesem Zusammenhang unpolare pyrogene Kieselsäuren gemeint, die oberflächlich modifiziert, vorzugsweise silyliert sind, wie sie beispielsweise in den Offenlegungsschriften EP 686676 B1 oder EP 1433 749 A1 beschrieben sind.

Für die erfindungsgemäß eingesetzten Kieselsäuren bedeutet dies, daß die Kieselsäureoberfläche hydrophobiert, d.h. silyliert ist.

Die erfindungsgemäß eingesetzten hydrophoben Kieselsäuren weisen eine Silanolgruppendichte von vorzugsweise kleiner 1,8 Silanolgruppen pro nm²_{,} bevorzugt von kleiner 1,0 Silanolgruppen pro nm² und besonders bevorzugt von kleiner 0,9 Silanolgruppen pro nm² auf.

Die erfindungsgemäß eingesetzten hydrophoben Kieselsäuren weisen einen Kohlenstoffgehalt von vorzugsweise größer oder gleich 0,4 Gew.% Kohlenstoff , bevorzugt 0,5 Gew.% bis 10 Gew.% Kohlenstoff und besonders bevorzugt 0,75 Gew% bis 5 Gew.% Kohlenstoff auf, wobei das Gewicht auf die hydrophobe Kieselsäure bezogen ist.

Die erfindungsgemäß eingesetzten hydrophoben Kieselsäuren weisen eine Methanolzahl von vorzugsweise größer 0, bevorzugt von größer 20 und besonders bevorzugt von größer 40 auf.

Die erfindungsgemäß eingesetzten hydrophoben Kieselsäuren weisen vorzugsweise eine DBP-Zahl (Dibutylphthalatzahl) von kleiner 250, bevorzugt 250 bis 150 auf.

Die Silanolgruppendichte ist mittels Säure-Base-Titration wie gegeben in G.W. Sears, Anal. Chem. 1956, 28, 1981 zugänglich, der Kohlenstoffgehalt kann durch Elementaranalyse bestimmt werden und die Methanolzahl ist der prozentuale Anteil von Methanol, welcher der Wasserphase zugesetzt werden muß, um vollständige Benetzung der Kieselsäure zu erreichen, d.h. ein vollständiges Einsinken der Kieselsäure in der Testflüssigkeit zu erreichen.

In einem bevorzugten Verfahren zur Herstellung der erfindungsgemäßen Dispersionen werden die hydrophoben Kieselsäuren in die Wasserphase vorzugsweise bei einem pH-Wert von 0 bis 7, bevorzugt bei einem pH-Wert von 0,5 bis 5 und besonders bevorzugt bei einem pH-Wert von 1 bis 3 zugegeben und vorzugsweise durch spontane Benetzung oder durch erzwungene Benetzung wie z.B. durch Schütteln, wie z.B. mit einem Taumelmischer, oder durch Rühren, wie beispielsweise durch Balkenrührer, Dissolver, Rotor-Stator-Systeme oder Induktoren mit Zwangsbenetzung im Scherspalt, eingearbeitet. Dabei hat es sich als vorteilhaft erwiesen den pH-Wert vorzugsweise während der Zugabe der hydrophoben Kieselsäure, des Einarbeitens und der nachfolgenden Dispergierung regelmäßig zu überprüfen und gegebenenfalls bei Abweichung durch Zusatz von Säure oder Base auf den gewünschten Zielwert zu korrigieren. Zum Einstellen bzw. Korrigieren des pH-Werts können handelsübliche organische und anorganische Säuren, d.h. Brönsted-Säuren wie vorzugsweise wässrige oder gasförmige HCl, wässrige oder wasserfreie HNO₃, H₂SO₄, H₃PO₄, p-Toluolsulfonsäure, Citronensäure, bevorzugt anorganische Säuren wie wässrige oder gasförmige HCl, wässrige oder wasserfreie HNO₃, H₂SO₄, H₃PO₄, besonders bevorzugt H₃PO₄ oder Brönsted-Basen wie vorzugsweise wässriger oder gasförmiger Ammoniak, wässrige oder wasserfreie NaOH, KOH, CaCO₃, CaO, Na-Methanolat oder organische Amine, bevorzugt wässriger oder gasförmiger Ammoniak, wässrige oder wasserfreie NaOH, KOH, eingesetzt werden.

Nach Erreichen der gewünschten Kieselsäurekonzentration und gegebenenfalls Nachdispergieren wird vorzugsweise der pH-Wert der Kieselsäuredispersion auf den erfindungsgemäßen Bereich von 7- 12 durch Zugabe von Base eingestellt. Vorzugsweise erfolgt die pH-Werteinstellung unter geringer Scherung, d.h. unter Einsatz von Mischaggregaten mit geringer Scherwirkung wie z.B. langsam laufender Dissolver, Balkenrührer, Flügelrührer, Statikmischer und andere bei maximal 2,5 m/s Umlaufgeschwindigkeit, bevorzugt bei maximal 2 m/s Umlaufgeschwindigkeit und besonders bevorzugt bei maximal 1 m/s Umlaufgeschwindigkeit. Vorzugsweise ist die Kieselsäurekonzentration in der sauren Dispersion größer 10 Gew.%, bevorzugt 10 Gew.% bis 60 Gew.%, besonders bevorzugt 15 Gew.% bis 55 Gew.%, ganz besonders bevorzugt 20 Gew.% bis 50 Gew.% und in einer speziellen Ausführungsform 20 Gew.% bis 30 Gew.% bezogen auf das Gesamtgewicht der Dispersion.

Zum Einstellen bzw. Korrigieren des pH-Werts können handelsübliche organische und anorganische Säuren, d.h. Brönsted-Säuren wie vorzugsweise wässrige oder gasförmige HCl, wässrige oder wasserfreie HNO₃, H₂SO₄, H₃PO₄, p-Toluolsulfonsäure, Citronensäure, bevorzugt anorganische Säuren wie wässrige oder gasförmige HCl, wässrige oder wasserfreie HNO₃, H₂SO₄, H₃PO₄, besonders bevorzugt H₃PO₄ oder Brönsted-Basen wie vorzugsweise wässriger oder gasförmiger Ammoniak, wässrige oder wasserfreie NaOH, KOH, CaCO₃, CaO, Na-Methanolat oder organische Amine, bevorzugt wäßriger oder gasförmiger Ammoniak, wässrige oder wasserfreie NaOH, KOH, eingesetzt werden.

Bei geringen Partikelkonzentrationen unter 10 Gew.% reicht im allgemeinen einfaches Rühren zur Einarbeitung der Partikel in die Flüssigkeit. Bevorzugt ist das Einarbeiten der Partikel in die Flüssigkeit bei hohem Schergefälle.

Die hydrophobe Kieselsäure kann vor der Einarbeitung verpackt, z.B. in Säcken, vorliegen oder in loser Form gelagert sein, z.B. in Silos oder Großgebinden. Die Zudosierung der hydrophoben Kieselsäuren kann über Sackschütten, Dosiersilos mit und ohne Verwägung oder durch direkte Förderung aus Lagersilos oder Großgebinden durch geeignete Förderanlagen wie Druckluftmembranpumpen oder Ventilatoren erfolgen.

Anschließend bzw. parallel zum Einarbeiten erfolgt das Dispergieren der Partikel. Bevorzugt ist paralleles Dispergieren. Paralleles Dispergieren bedeutet dabei, daß mit Beginn des Zudosierens und Einarbeitens der Kieselsäure in die wässrige Phase der Dispergierprozeß beginnt. Dies kann durch ein Dispergiersystem in dem Behältnis geschehen, oder durch Umpumpen in externen Rohrleitungen, die ein Dispergierorgan enthalten, aus dem Behältnis, unter bevorzugt geschlossener Rückführung zurück in das Behältnis. Durch eine teilweise Rückführung, und teilweise kontinuierliche Entnahme, kann dieser Prozeß bevorzugt kontinuierlich gestaltet werden. Hierfür sind vorzugsweise schnellaufende Rührer, schnellaufende Dissolver, z.B. mit Umlaufgeschwindigkeiten von 1-50 m/s, schnellaufende Rotor-Stator Systeme, Sonolatoren, Scherspalte, Düsen oder Kugelmühlen geeignet.

Bevorzugt kann die Einarbeitung und Dispergierung der Kieselsäure mittels Induktoren wie z.B. Conti TDS 4 der Fa. Ystral erfolgen. Dabei wird die pulverförmige hydrophobe Kieselsäure durch Ansaugen durch Vakuum oder zwangsförderung z.B. mittels Pumpen direkt in den Scherspalt eindosiert.

Insbesondere geeignet ist zur Dispergierung der hydrophoben Kieselsäuren der Einsatz von Ultraschall vorzugsweise im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflußsystemen, die, gegebenenfalls durch eine Rohrleitung oder Rohrwand abgetrennter Systeme, einen oder mehrere Ultraschallgeber enthalten.

Gegebenenfalls kann die Dispergierung durch Kombination verschiedener Methoden erfolgen, z.B. Vordispergierung mittels Dissolver oder Induktor mit anschließender Feindispergierung durch Ultraschallbehandlung.

Bevorzugt erfolgt die Dispergierung bei erhöhter Temperatur in einem Temperaturbereich von vorzugsweise 30 °C bis 90 °C, besonders bevorzugt in einem Temperaturbereich von 35 °C bis 80 °C, ganz besonders bevorzugt in einem Temperaturbereich von 40 °C bis 75 °C und in einer speziellen Ausführung in einem Temperaturbereich von 40 °C bis 60 °C.

Vorzugsweise erfolgt die Temperierung mit Hilfe der Wärmeentwicklung während des Dispergierprozesses bzw. durch externe Wärmequellen, wie elektrische Beheizung mittels Wärmemantel, Dampfbeheizung über Heizschlangen oder ähnliches. Gegebenenfalls kann zusätzlich, zur Regelung der Temperatur, gekühlt werden, beispielsweise mittels mit einem Kühlmedium gefüllten Kühlschlangen oder Kühlmäntel.

Die erfindungsgemäße Herstellung kann in diskontinuierlichen und in kontinuierlichen Verfahren erfolgen. Bevorzugt sind kontinuierliche Verfahren.

Vorzugsweise wird die Feindispergierung an einer hochkonzentrierten Masterbatch-Dispersion durchgeführt und anschließend auf die gewünschte Endkonzentration herunter verdünnt. Vorzugsweise enthält die Masterbatch-Dispersion größer 20 Gew.% hydrophobe Kieselsäure, bevorzugt 20 bis 60 Gew.% hydrophobe Kieselsäure und besonders bevorzugt 25 bis 55 Gew.% hydrophobe Kieselsäure und ganz besonders bevorzugt 25 bis 50 Gew.% hydrophobe Kieselsäure bezogen auf das Gesamtgewicht der Dispersion.

In einer besonders bevorzugten Vorgehensweise wird der Masterbatch vor pH-Inversion vom Sauren ins Basische mit VE-Wasser (vollentsalztes Wasser = VE Wasser) vorverdünnt, anschließend der pH-Wert eingestellt und in einem letzten Schritt der gewünschte Festgehalt durch Zugabe von VE-Wasser eingestellt.

Zur Herstellung der erfindungsgemäßen Dispersionen wird vorzugsweise Reinwasser, bevorzugt vollentsalztes (VE) Wasser mit einer Leitfähigkeit kleiner 100 µS/cm verwendet.

Die Leitfähigkeit der erfindungsgemäßen Dispersionen ist vorzugsweise kleiner 20 mS/cm, bevorzugt kleiner 15 mS/cm, besonders bevorzugt kleiner 10 mS/cm.

Die erfindungsgemäßen Verfahren haben den Vorteil, daß sie sehr einfach in der Durchführung sind und wäßrige Dispersionen mit sehr hohen Feststoffgehalten an hydrophoben Kieselsäuren hergestellt werden können.

Die erfindungsgemäßen Dispersionen weisen vorzugsweise einen Gehalt an hydrophoben Kieselsäuren von größer 10 Gew.%, bevorzugt 10 Gew.% bis 60 Gew.%, besonders bevorzugt 15 Gew.% bis 55 Gew.%, ganz besonders bevorzugt 20 Gew.% bis 50 Gew.% und in einer speziellen Ausführungsform 20 Gew.% bis 30 Gew .% auf, bezogen auf das Gesamtgewicht der Dispersion.

Die erfindungsgemäßen wäßrigen Dispersionen mit hohem Gehalt an hydrophoben Kieselsäuren sind insbesondere dadurch gekennzeichnet, daß sie vorzugsweise einen pH-Wert im Bereich von 7 bis 12, bevorzugt 7,5 bis 11, besonders bevorzugt 8 bis 10,5 aufweisen.

Die erfindungsgemäßen wäßrigen Dispersionen hydrophober Kieselsäuren sind insbesondere dadurch gekennzeichnet, daß sie eine enge Größenverteilung des hydrodynamischen Äquivalentdurchmessers aufweisen. Dies bedeutet, daß der Polydispersitätsindex (PDI) in der Partikelgrößenbestimmung mittels Photonenkorrelationsspektroskopie kleiner 0,5, bevorzugt kleiner 0,4 und besonders bevorzugt kleiner 0,3 und in einer speziellen Ausführung kleiner 0,25 ist.

Die erfindungsgemäßen wässrigen Dispersionen hydrophober Kieselsäuren sind insbesondere dadurch gekennzeichnet, daß sie maximal eine Bimodalität der Größenverteilung des hydrodynamischen Äquivalentdurchmessers aufweisen, d.h. die Größenverteilung maximal zwei isolierte monomodale Verteilungen aufweist. Der Maximalwert oder auch Modalwert der ersten monomodalen Verteilung liegt dabei vorzugsweise im Bereich von 0 bis 500 nm, der Maximalwert oder auch Modalwert des zweiten monomodalen Verteilung im Bereich von vorzugsweise 500 bis 5000 nm. Die Intensität der zweiten monomodalen Verteilung im Bereich von 500 bis 5000 nm beträgt dabei vorzugsweise maximal 50% der Gesamtintensität beider Verteilungen, bevorzugt maximal 25% der Gesamtintensität bei der Verteilungen, besonders bevorzugt maximal 10% der Gesamtintensität beider Verteilungen und in einer speziellen Ausführung ist keine zweite monomodale Verteilung im Bereich von 500 bis 5000 nm nachzuweisen, d.h. die Gesamtverteilung ist monomodal.

Die erfindungsgemäßen wäßrigen Dispersionen mit hohem Gehalt an hydrophoben Kieselsäuren sind insbesondere dadurch gekennzeichnet, daß sich niedrigviskose Dispersionen mit einem pH-Wert im Bereich von 7 bis 12, bevorzugt 7,5 bis 11, besonders bevorzugt 8 bis 10,5 erhalten lassen. Dies bedeutet, daß die Dispersionen vorzugsweise mit einem pH-Wert im Bereich von 8 bis 10,5 und einem Kieselsäuren-Gehalt von 20 bis 30 Gew.-% eine Viskosität von kleiner 1000 mPas, bevorzugt eine Viskosität von kleiner 800 mPas, besonders bevorzugt eine Viskosität von kleiner 700 mPas aufweisen und ganz besonders bevorzugt eine Viskosität von kleiner 500 mPas aufweisen, wobei die Viskosität gemessen wurde mit einem Kegel-Platte-SensorSystem mit 105 *µ*m Meßspalt, bei 25 °C und einer Scherrate von 100 s⁻¹.

Die erfindungsgemäßen wäßrigen Dispersionen mit hohem Gehalt an hydrophoben Kieselsäuren zeichnen sich ferner dadurch aus, daß bei einer schrittweisen oder kontinuierlichen Erniedrigung des Dispersions-pH-Wertes von pH 9 auf 4 die Viskosität schrittweise oder kontinuierlich ansteigt, ohne dabei ein signifikantes, d.h. über die übliche experimentelle Streuung hinausgehendes, lokales Viskositätsmaximum aufzuweisen. Dies bedeutet insbesondere, dass vorzugsweise der Quotient η_{7/9} = η₇/η₉ aus der Scherviskosität bei pH 9 (η₉) und bei pH 7 (η₇) und der Quotient η_{4/7} = η₄/η₇ aus der Scherviskosität bei pH 7 (η₇) und bei pH 4 (η₄) jeweils einen Wert größer gleich 1, bevorzugt einen Wert 1 bis 1000, besonders bevorzugt einen Wert 1 bis 500 und ganz besonders bevorzugt einen Wert 1 bis 100 aufweist, wobei die Viskosität mit einem Kegel-Platte-SensorSystem mit 105 *µ*m Meßspalt, bei 25 °C und eine Scherrate von 100 s⁻¹, gemessen wurde.

Die erfindungsgemäßen wäßrigen Dispersionen mit hohem Gehalt an hydrophoben Kieselsäuren zeichnen sich ferner dadurch aus, daß sie eine ausgezeichnete Lagerstabilität aufweisen. Das heißt, daß die Viskosität einer Dispersion vorzugsweise mit einem pH-Wert im Bereich von 8 - 10,5 nach einer Lagerzeit von 4 Wochen bei 40 °C maximal um den Faktor 5, bevorzugt maximal um den Faktor 2,5, besonders bevorzugt maximal um den Faktor 2,0 und ganz besonders bevorzugt maximal um den Faktor 1,5 gegenüber der Viskosität ummittelbar nach Herstellen der Dispersion gestiegen ist, wobei die Viskosität mit einem Kegel-Platte-Sensor-System mit 105 *µ*m Meßspalt, bei 25 °C und eine Scherrate von 100 s⁻¹ ,gemessen wurde.

Die erfindungsgemäßen wäßrigen Dispersionen mit hohem Gehalt an hydrophoben Kieselsäuren zeichnen sich ferner dadurch aus, daß sie eine ausgezeichnete Lagerstabilität aufweisen. Das heißt, daß die Dispersionen vorzugsweise mit einem pH-Wert im Bereich von 8 - 10,5 nach einer Lagerzeit von 4 Wochen bei 40 °C eine Fließgrenze von kleiner 100 Pa, bevorzugt kleiner 10 Pa, besonders bevorzugt kleiner 1 Pa und ganz besonders bevorzugt kleiner 0,1 Pa aufweisen, jeweils gemessen mit der Flügelkörpermethode bei 25 °C gemäß Q. D. Nguyen, D. Boger, J. Rheol. 1985, 29, 335.

Die erfindungsgemäßen Dispersionen sind ferner dadurch charakterisiert, daß sie vorzugsweise im pH-Bereich von 7 - 12 ein negatives ZETA-Potential aufweisen. Bevorzugt ist das ZETA-Potential bei einem pH-Wert von 9 kleiner -5 mV, besonders bevorzugt kleiner -10 mV und ganz besonders bevorzugt kleiner - 15 mV. Das ZETA-Potential kann beispielsweise bestimmt werden durch Messung des Kolloidvibrationspotentials z.B. mittels der ZETA-Potentialsonde DT300 der Fa. Dispersion Technologies oder durch Bestimmung der elektrophoretischen Mobilität durch Laser-Doppler-Velocemetrie mittels Zetasizer ZS der Fa. Malvern Instruments.

Die erfindungsgemäßen Dispersionen sind ferner dadurch charakterisiert, daß sie vorzugsweise einen isoelektrischen Punkt (iep) bei einem pH-Wert größer 4 aufweisen, wobei der isoelektrischen Punkt definiert ist als der pH-Wert einer Dispersion, bei der das ZETA-Potential den Wert Null aufweist.

Die erfindungsgemäßen Dispersionen sind ferner dadurch charakterisiert, daß die dispergierten Partikel vorzugsweise in Form feinverteilter Sinteraggregate vorliegen.

Die Sinteraggregate sind dabei dadurch charakterisiert, daß bei einer Partikelgrößenbestimmung mittels quasielastischer Lichtstreuung der gemessene hydrodynamische Äquivalentdurchmesser vorzugsweise mindestens um dem Faktor 2, bevorzugt um den Faktor 2,5 bis 50, besonders bevorzugt um den Faktor 2,8 bis 30, jeweils bezogen auf eine spezifische Oberfläche von 100 m²/g, bei kleinerer bzw. größerer Oberfläche verkleinert bzw. vergrößert sich der Faktor entsprechend linear, größer ist als der gemäß der Formel a = 6/A_{BET} * d rechnerisch erhältliche Durchmesser der Primärpartikel, wobei A_{BET} die mittels Stickstoffadsorption gemäß DIN 66131 gemessene spezifische BET-Oberfläche der hydrophilen Ausgangskieselsäure und d die Dichte der Primärpartikel ist.

Die erfindungsgemäßen Dispersionen sind ferner dadurch gekennzeichnet, daß sie gegebenenfalls Fungizide oder Bakterizide, wie Methylisothiazolone oder Benzisothiazolone enthalten.

Bevorzugt ist der Gehalt der erfindungsgemäßen wässrigen Dispersion an weiteren organischen Zuschlagstoffen, wie vorzugsweise organischen Lösungsmitteln, außer Fungizide oder Bakterizide vorzugsweise kleiner als 5 Gew.%, bevorzugt kleiner als 1 Gew.%, besonders bevorzugt kleiner als 0,5 Gew.%, im Besonderen kleiner als 0,1 Gew.%, bezogen auf das Gesamtgewicht der Dispersion und in einer speziellen Ausführungsform werden keine weiteren organischen Zuschlagstoffen, wie organische Lösungsmittel, außer Fungizide oder Bakterizide, zugesetzt.

Insbesondere ist der Gehalt der erfindungsgemäßen wäßrigen Dispersionen an organischen oder anorganischen Dispergierhilfsmitteln, wie vorzugsweise Tensiden, Schutzkolloiden oder weiteren feinteiligen Metalloxiden mit gleicher oder unterschiedlicher Oberflächenladung, wie die hydrophoben Kieselsäuren, d.h. mit gleichem oder unterschiedlichem ZETA-Potential, wie die hydrophoben Kieselsäuren, vorzugsweise kleiner als 5 Gew.%, bevorzugt kleiner als 1 Gew.%, besonders bevorzugt kleiner als 0,5 Gew.%, bezogen auf das Gesamtgewicht der Dispersion, im Besonderen enthalten die erfindungsgemäßen wäßrigen Dispersionen keine organischen oder anorganischen Dispergierhilfsmitteln.

Die hydrophoben Kieselsäurepartikel haben vorzugsweise eine mittlere Primärteilchen-Partikelgröße d-PP von 0,5 bis 1000 nm, bevorzugt 5 bis 100 nm, besonders bevorzugt 5 bis 50 nm. Geeignete Messverfahren hierzu sind zum Beispiel die Transmissions-Elektronenmikroskopie oder Hochauflösende Rasterelektronenmikroskopie, z.B. im Feldemissionsmodus.

Die hydrophoben Kieselsäurepartikel haben vorzugsweise eine mittlere Sekundärstruktur- oder Aggregates-Partikelgröße d_{Aggr} von 25 bis 5000 nm, bevorzugt von 50 bis 800 nm, besonders bevorzugt von 75 bis 500 nm gemessen als hydrodynamischen Äquivalentdurchmesser.

Geeignete Messverfahren hierzu sind zum Beispiel die Dynamische Lichtstreuung oder Photonenkorrelationsspektroskopie, zur Messung von Konzentrationen kleiner 0,01 Gew.% in Rückstreuung ausgeführt bzw. mittels Kreuzkorrelation gegen Mehrfachstreuung korrigiert.

Ein weiterer Gegenstand der Erfindung ist die Herstellung partikelstabilisierter O/W-Emulsionen (Pickering Emulsionen) unter Verwendung der erfindungsgemäßen Dispersionen.
Dabei zeigte sich, daß aus dem im Folgenden beschriebenen Verfahren die besten Ergebnisse resultieren.

Eine bei vorzugsweise pH 9 niedrigviskose erfindungsgemäße Dispersion wird vorzugsweise durch Zusatz einer Protonensäure z.B. Salzsäure vorzugsweise auf einen pH-Wert von kleiner 5 angesäuert. In die nun höherviskose Kieselsäuredispersion wird vorzugsweise die Ölphase einemulgiert, beispielsweise mit Hilfe eines vorzugsweise schnellaufenden Mischgeräts wie Dissolver, Rotor-Stator-Systeme, oder an Ultraschallgebern oder anderen Emulgiermaschinen. Gegebenenfalls kann nach einemulgieren der gesamten Ölmenge zusätzlich Wasser zudosiert werden. Dies kann unter Scherbedingungen oder durch einfaches Rühren erfolgen.

Gegebenenfalls kann auch erst die Ölphase vorgelegt werden und anschließend die erfindungsgemäße Dispersion unter Rühren z.B. vorzugsweise mittels schnellaufender Mischgeräte wie vorzugsweise Dissolver, Rotor-Stator-Systeme, oder an Ultraschallgebern eindispergiert werden.

Gegebenenfalls können die so erhaltenen Emulsionen nochmals zur Verbesserung der Eigenschaften einem weiteren Emulgierprozeß unterworfen werden, z.B. vorzugsweise an Hochdruckhomogenisatoren oder Ultraschalldurchflußzellen.

Gegebenenfalls kann der pH-Wert der erhaltenen Emulsion vorzugsweise durch Zugabe von Säure, z.B. Salzsäure, oder Base, z.B. wässrige NaOH-Lösung, auf den gewünschten pH-Wert eingestellt werden. Dies kann vorzugsweise unter einfachem Rühren oder unter Scherbedingungen, z.B. an einem Dissolver erfolgen. Bevorzugt ist einfaches Einrühren.

Gegebenenfalls kann die Ionenstärke der wäßrigen Phase der Emulsion durch Zugabe von vorzugsweise Elektrolyt, z.B. NaCl auf die gewünschte Ionenstärke eingestellt werden, um die Viskosität der Emulsion zu erhöhen. Dies kann vorzugsweise unter einfachem Rühren oder unter Scherbedingungen, z.B. an einem Dissolver erfolgen. Bevorzugt ist einfaches Einrühren.

Zur Erhöhung der Viskosität können der Emulsion vorzugsweise 1 10⁻⁴ mol/l bis 10 mol/l, bevorzugt 0,5 · 10⁻³ mol/l bis 5 mol/l und besonders bevorzugt 1 · 10⁻³ mol/l bis 1 mol/l Elektrolyt zugesetzt werden.

Die Erfindung betrifft ferner den Einsatz der erfindungsgemäßen wässrigen Dispersionen vorzugsweise bei der Beschichtung von Oberflächen, wie mineralische Substrate, wie Metalle, z.B. Stahl oder Eisen, z.B. mit dem Ziel des Korrosionsschutzes.

Die Erfindung betrifft ferner den Einsatz der erfindungsgemäßen wässrigen Dispersionen vorzugsweise bei der Herstellung von Farben und Lacken, Kunstharzen, Klebstoffen und Dichtstoffen, insbesondere solchen, die auf wässriger Basis hergestellt sind.

Die Erfindung betrifft den Einsatz der erfindungsgemäßen wässrigen Dispersionen bei der Herstellung von vorzugsweise Farben und Lacken, Kunstharzen, Klebstoffen und Dichtstoffen, insbesondere zur Einstellung und Kontrolle der Rheologie.

Die Erfindung betrifft den Einsatz der erfindungsgemäßen wässrigen Dispersionen bei der Herstellung von vorzugsweise Farben und Lacken, Kunstharzen, Klebstoffen und Dichtstoffen, insbesondere zur Verbesserung von deren mechanischen Eigenschaften wie zum Bespiel der Verbesserung der Kratzfestigkeit und der Verbesserung der Fließeigenschaften bei Zubereitungen zur Anwendung auf Oberflächen.

Ein weiterer Gegenstand der Erfindung ist sind Oberflächenbeschichtungen, die die erfindungsgemäßen Dispersionen aufweisen.

Die Erfindung betrifft den Einsatz der erfindungsgemäßen wässrigen Dispersionen bei der Beschichtung von Druckmedien, insbesondere solchen Papieren die bei berührungsfreien Druckverfahren eingesetzt werden, Beispiele sind Papiere für Ink Jet Printer und im Besonderen solche Papiere mit hohem Glanz.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht und alle Prozentangaben sind auf das Gesamtgewicht bezogen, alle Temperaturen 20°C und alle Drücke 1,013 bar (abs.). Alle Viskositäten werden bei 25°C bestimmt.

Die Erfindung betrifft vorzugsweise den Einsatz der erfindungsgemäßen wässrigen Dispersionen bei chemisch-mechanischen Planarisierung von Oberflächen im Halbleiterbereich.

### Beispiele

### Beispiel 1

300 g einer hydrophoben pyrogenen Kieselsäure (erhältlich unter der Bezeichnung HDK^{®} H20 bei der Wacker Chemie AG, München) mit einem Restsilanolgehalt von 50% und einem Kohlenstoffgehalt von 1,3%, erhalten durch Behandeln einer hydrophilen Ausgangskieselsäure mit einer spezifischen BET-Oberfläche von 200 m²/g mit Dimethyldichlorsilan, werden portionsweise an einem Dissolver bei 5000 - 8000 rpm in 450 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließend unter langsamem Rühren mit 550 g VE-Wasser verdünnt und mit wäßriger NaOH auf pH 9 gebracht. Es resultiert eine dünnflüssige Kieselsäuredispersion, deren analytische Daten in Tabelle 1 zusammengefaßt sind.

### Beispiel 2

300 g einer hydrophoben pyrogenen Kieselsäure (erhältlich unter der Bezeichnung HDK^{®} H30 bei der Wacker Chemie AG, München) mit einem Restsilanolgehalt von 50% und einem Kohlenstoffgehalt von 1,9%, erhalten durch Behandeln einer hydrophilen Ausgangskieselsäure mit einer spezifischen BET-Oberfläche von 300 m²/g mit Dimethyldichlorsilan, werden portionsweise an einem Dissolver bei 5000 - 8000 rpm in 450 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließend unter langsamem Rühren mit 550 g VE-Wasser verdünnt und mit wässriger NaOH auf pH 9 gebracht. Es resultiert eine dünnflüssige Kieselsäuredispersion, deren analytische Daten in Tabelle 1 zusammengefaßt sind.

### Beispiel 3

300 g einer hydrophoben pyrogenen Kieselsäure mit einem Restsilanolgehalt von 72% und einem Kohlenstoffgehalt von 0,6%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker Chemie AG, München) mit Dimethyldichlorsilan gemäß EP 1433749 A1, werden portionsweise an einem Dissolver bei 5000 - 8000 rpm in 450 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließend unter langsamen Rühren mit 550 g VE-Wasser verdünnt und mit wäßriger NaOH auf pH 9 gebracht. Es resultiert eine dünnflüssige Kieselsäuredispersion, deren analytische Daten in Tabelle 1 zusammengefaßt sind.

### Beispiel 4

750 g einer hydrophoben pyrogenen Kieselsäure (erhältlich unter der Bezeichnung HDK^{®} H15 bei der Wacker Chemie AG, München) mit einem Restsilanolgehalt von 50% und einem Kohlenstoffgehalt von 1,0%, erhalten durch Behandeln einer hydrophilen Ausgangskieselsäure mit einer spezifischen BET-Oberfläche von 150 m²/g mit Dimethyldichlorsilan, werden portionsweise an einem Dissolver bei 5000 - 8000 rpm in 1000 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließend unter langsamen Rühren mit 800 g VE-Wasser verdünnt und mit wäßriger NaOH auf pH 9 gebracht. Es resultiert eine dünnflüssige Kieselsäuredispersion, deren analytische Daten in Tabelle 1 zusammengefaßt sind.

### Beispiel 5

750 g einer hydrophoben pyrogenen Kieselsäure mit einem Restsilanolgehalt von 72% und einem Kohlenstoffgehalt von 0,6%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker Chemie AG, München) mit Dimethyldichlorsilan gemäß EP 1433749 A1, werden portionsweise an einem Dissolver bei 5000 - 8000 rpm in 1000 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließen unter langsamem Rühren mit 800 g VE-Wasser verdünnt und mit wäßriger NaOH auf pH 9 gebracht. Es resultiert eine dünnflüssige Kieselsäuredispersion, deren analytische Daten in Tabelle 1 zusammengefaßt sind.

### Beispiel 6

350 g einer hydrophoben pyrogenen Kieselsäure (erhältlich unter der Bezeichnung HDK^{®} H20 bei der Wacker Chemie AG, München) mit einem Restsilanolgehalt von 50% und einem Kohlenstoffgehalt von 1,3%, erhalten durch Behandeln einer hydrophilen Ausgangskieselsäure mit einer spezifischen BET-Oberfläche von 200 m²/g mit Dimethyldichlorsilan, werden portionsweise an einem Dissolver bei 5000 - 8000 rpm in 1000 g vollentsalztes VE-Wasser eindispergiert. Dabei wird der pH-Wert der Dispersion durch Zudosieren von wäßriger H₃PO₄ in einem Bereich von 2 - 2,5 gehalten. Nach vollständiger Zugabe der Kieselsäure wird noch 30 min bei 8000 rpm und einer Temperatur von 45 bis 50 °C nachdispergiert. Die erhaltene niedrigviskose Dispersion wird anschließend unter langsamen Rühren mit 800 g VE-Wasser verdünnt und mit wäßriger NaOH auf pH 9 gebracht. Die auf 45 °C temperierte niedrigviskose Dispersion wird anschließend bei einer Durchflußrate von 5-10 ml/min durch eine Ultraschalldurchflußzelle (Fa. Hielscher; 24 kHz; 400 W) gepumpt. Es resultiert eine dünnflüssige Kieselsäuredispersion, deren analytische Daten in Tabelle 1 zusammengefaßt sind.

### Beispiel 7 (nicht erfindungsgemäß)

300 g einer hydrophoben pyrogenen Kieselsäure (erhältlich unter der Bezeichnung HDK^{®} H20 bei der Wacker Chemie AG, München) mit einem Restsilanolgehalt von 50% und einem Kohlenstoffgehalt von 1,3%, erhalten durch Behandeln einer hydrophilen Ausgangskieselsäure mit einer spezifischen BET-Oberfläche von 200 m²/g mit Dimethyldichlorsilan, werden portionsweise an einem Dissolver bei 300 - 600 rpm in 1000 g vollentsalztes VE-Wasser eingerührt. Dabei wird der pH-Wert der Dispersion durch Zudosieren von wäßriger NaOH in einem Bereich von 9 - 9,5 gehalten. Nach vollständiger Zugabe der Kieselsäure wird noch 30 min bei 6000 rpm und Kühlen der Suspension auf 20 °C nachdispergiert. Es resultiert eine Kieselsäuredispersion, deren analytische Daten in Tabelle 1 zusammengefaßt sind.

**Tabelle 1:**

| | Kieselsäure [%] | pH-Wert | Zeta-Potential [mV] ; (pH 9) | η / Pas (pH 9) | η / Pas (pH 7) | η / Pas (pH 4) | PDI | Iᵣₑₗ / % |
|---|---|---|---|---|---|---|---|---|
| Beispiel 1 | 23,6 | 9,03 | -31,8 | 0,38 | 1,99 | 2,41 | 0,19 | 24 |
| Beispiel 2 | 22,9 | 9,15 | -29,1 | 0,52 | 3,68 | 4,89 | 0,23 | 38 |
| Beispiel 3 | 23,3 | 9,28 | -19,5 | 0,012 | 0,11 | 0,38 | 0,17 | 0 |
| Beispiel 4 | 29,1 | 9,42 | -25,4 | 0,08 | 0,17 | 0,48 | 0,18 | 10 |
| Beispiel 5 | 28,7 | 9,47 | -15,2 | 0,03 | 0,075 | 0,32 | 0,13 | 0 |
| Beispiel 6 | 25,9 | 9,09 | -32,6 | 0,25 | 1,34 | 2,06 | 0,18 | 17 |
| Beispiel 7 | 23,8 | 9,24 | -28,4 | 0,44 | 2,36 | 3,13 | 1,0 | 84 |

- Feststoffgehalt der Dispersion bestimmt nach folgender Methode: 10 g wässrige Dispersion werden in einer Porzellanschale mit der gleichen Menge Ethanol versetzt und in einem N₂-gespülten Trockenschrank bei 150 °C zur Gewichtskonstanz eingedampft. Die Masse mₛ des trockenen Rückstandes ergibt den Feststoffgehalt gemäß Feststoffgehalt / % = mₛ * 100 / 10 g.
- ZETA-Potential der Dispersionen gemessen nach folgender Methode: Eine Dispersion wird mit VE-Wasser mit identischem pH-Wert wie die Dispersion auf ca. 1,5 Gew.% Kieselsäure verdünnt. An einem Zetasizer ZS der Fa. Malvern Instruments wird das ZETA-Potential über den pH-Wert-Bereich von 9,5 bis 2 gemessen, wobei die pH-Einstellung mittels Autotitrator in pH-Wert-Schritten von 1 erfolgt.
- Viskosität der Dispersion bestimmt mit einem Rheometer RS 600 der Fa. Haake mit Kegel-Platte-Sensorsytem (105 *µ*m Meßspalt) bei 25 °C und einer Scherrate D = 100 s⁻¹.
- Mittlerer Durchmesser der Sinteraggregate gemessen mittels Photonenkorrelationsspektroskopie nach folgender Methode: Eine Dispersion wird mit VE-Wasser mit identischem pH-Wert wie die Dispersion auf ca. 0,3 Gew.% Kieselsäure verdünnt. An einem Zetasizer ZS der Fa. Malvern Instruments wird die Probe bei 25 °C in Rückstreuung vermessen. Der mittlere Durchmesser der Aggregate ist der z-Average (Kumulantenmittel) und entspricht dem hydrodynamischen Äquivalenzdurchmesser der Kieselsäure-Aggregate. Die relative Intensität Iᵣₑₗ der monomodalen Verteilung im Bereich von 500 nm bis 5000 nm ergibt sich aus Iᵣₑₗ = I(500-5000)/I(0-500)+I(500-5000), wobei I(0-500) und I(500-5000) die absoluten Signalintensitäten der momomodalen Verteilungen im Bereich von 0 nm - 500 nm bzw. 500 nm - 5000 nm bedeuten. Der PDI ist der Polydispersitätsindex der sich ergibt aus dem Quotienten des zweiten Impulses der Kumulantenanalyse der Autokorrelationsfunktion dividiert durch die mittlere Abklingkonstante in der Kumulantenanalyse.
- pH-Wert gemessen mittels pH-Einstabmesskette

### Beispiel 8 (Herstellung einer Emulsion)

54 g der in Beispiel 1 beschriebenen Kieselsäuredispersion mit einem Feststoffgehalt von 23 Gew.% werden in einem 500 ml Edelstahlbecher vorgelegt. Durch Zusatz von wäßriger HCl wird ein pH-Wert von ca. 5 eingestellt. Zu der nun höherviskosen Suspension werden unter Rühren bei 10000 rpm mit einem Ultraturrax und Wasserkühlung über einem Zeitraum von ca. 15 min langsam 150 g eines Polydimethylsiloxans mit einer Viskosität von 100 mPas (erhältlich unter dem Namen "AK100" bei Wacker-Chemie GmbH, D-München) zudosiert. Dabei sollte die Temperatur der Mischung nicht über 60 °C steigen. Zu dieser nun hochviskosen standfesten Masse werden anschließend 108 g VE-Wasser ebenfalls bei 10000 rpm langsam über einen Zeitraum von 15 min zugegeben. Dabei sollte die Temperatur der Mischung nicht über 60 °C steigen. Es resultiert eine dünnflüssige weiße O/W-Emulsion, deren analytische Daten in Tabelle 2 zusammengefaßt sind.

**Tabelle 2:**

| | d₅₀ / *µ*m | pH-Wert | η / Pas (pH 5,45) |
|---|---|---|---|
| Beispiel 8 | 5,4 | 5,45 | 0,152 |

- Mittlerer T opfendurchmesser d₅₀ gemessen mittels Fraunhofer-Laserbeugung an einem Sympatec Helos/BF in Küvetten-Meßtechnik.
- pH-Wert gemessen mittels pH-Einstabmesskette Viskosität der Emulsion bestimmt mit einem Rheometer RS 600 der Fa. Haake mit Kegel-Platte-Sensorsytem (105 *µ*m Meßspalt) bei 25 °C und einer Scherrate D = 10 s⁻¹.

## Patentansprüche

1. Verfahren zur Herstellung wäßriger Dispersionen hydrophober unpolarer pyrogener Kieselsäuren, die oberflächlich modifiziert sind, **dadurch gekennzeichnet, daß** die unpolaren pyrogenen Kiese-säuren, die oberflächlich modifiziert sind, in eine Wasserphase bei einem pH-Wert von 0 bis 6 eindispeigiert werden und in einem weiteren Schritt der pH-Wert der Kieselsäuredispersion auf einen pH Wert von 7 - 12 durch Zugabe von Base eingestellt wird.

2. Verfahren nach Anspruch 1, **dadurch gekennzeichnet, daß** die Dispergierung bei einer Temperatur von 30°C bis 90°C erfolgt.

3. Verfahren nach Anspruch 1 oder 2, **dadurch gekennzeichnet, daß** die Kieselsäurekonzentration in der sauren Dispersion 10 Gew.% bis 60 Gew.% beträgt.

4. Verfahren nach einem oder mehreren der Ansprüche 1 bis 3, **dadurch gekennzeichnet, daß** die saure Dispersion vor der Einstellung des pH Werts auf einen Wert von 7 bis 12 verdünnt wird.

5. Verfahren nach einem oder mehreren der Ansprüche 1 bis 4, **dadurch gekennzeichnet, daß** die Einstellung des pH Wertes unter Einsatz möglichst geringer Scherkräfte erfolgt.

6. Wäßrige Dispersionen hydrophober unpolarer pyrogener Kieselsäuren, die oberflächlich modifiziert sind, **dadurch gekennzeichnet, daß** die Dispersion einen pH Wert von 7 bis 12 und einen Polydispersitätsindex von kleiner 0,5 aufweist, wobei der Polydispersitätsindex sich aus dem Quotienten des zweiten Impulses der Kumulantenanalyse der Autokorrelationsfunktion dividiert durch die mittlere Abklingkonstante in der Kumulantenanalyse ergibt.

7. Wäßrige Dispersionen hydrophober unpolarer pyrogener Kieselsäuren die oberflächlich modifiziert sind, nach Anspruch 6, **dadurch gekennzeichnet, daß** die Partikelgrößenverteilung der Dispersion maximal zwei isolierte monomodale Verteilungen aufweist, wobei der Maximalwert der ersten monomodalen Verteilung im. Bereich von 0 bis 500 nm, der Maximalwert der zweiten monomodalen Verteilung im Bereich von 500 bis 5000 nm liegt.

8. Verwendung der Dispersionen nach den Ansprüchen 6 oder 7 oder einer Dispersion hergestellt nach einem der Ansprüche 1 bis 5 zur Herstellung partikelstabilisierter O/W-Emulsionen (Pickering Emulsionen).

9. Verwendung der Dispersionen nach den Ansprüchen 6 oder 7 oder einer Dispersion hergestellt nach einem der Ansprüche 1 bis 5 zur Verbesserung der Kratzfestigkeit von Oberflächenbeschichtungen.

10. Verwendung der Dispersionen nach den Ansprüchen 6 oder 7 oder einer Dispersion hergestellt nach einem der Ansprüche 1 bis 5 zur Verbesserung der Fließeigenschaften bei Zubereitungen zur Anwendung auf Oberflächen.

11. Verwendung der Dispersionen nach den Ansprüchen 6 oder 7 oder einer Dispersion hergestellt nach einem der Ansprüche 1 bis 5 zur Beschichtung von Druckmedien.

12. Oberflächenbeschichtung, **dadurch gekennzeichnet, dass** sie eine Dispersion nach den Ansprüchen 6 oder 7 oder hergestellt nach einem der Ansprüche 1 bis 5 aufweist.

## Claims

1. Process for preparing aqueous dispersions of hydrophobic apolar fumed silicas which are modified on the surface, **characterized in that** the apolar fumed silicas which are modified on the surface are dispersed into a water phase at a pH of 0 to 6 and, in a further step, the pH of the silica dispersion is adjusted to a pH of 7 - 12 by adding base.

2. Process according to Claim 1, **characterized in that** the dispersing takes place at a temperature from 30°C to 90°C.

3. Process according to Claim 1 or 2, **characterized in that** the silica concentration in the acidic dispersion is 10% by weight to 60% by weight.

4. Process according to one or more of Claims 1 to 3, **characterized in that** the acidic dispersion is diluted before the pH is adjusted to a level of 7 to 12.

5. Process according to one or more of Claims 1 to 4, **characterized in that** the adjustment of the pH takes place using minimal shearing forces.

6. Aqueous dispersions of hydrophobic apolar fumed silicas which are modified on the surface, **characterized in that** the dispersion has a pH of 7 to 12 and a polydispersity index of less than 0.5, the polydispersity index being given by the ratio of the second pulse in the cumulant analysis of the autocorrelation function, divided by the average decay constant in the cumulant analysis.

7. Aqueous dispersions of hydrophobic apolar fumed silicas which are modified on the surface according to Claim 6, **characterized in that** the particle size distribution of the dispersion has not more than two isolated monomodal distributions, the maximum value of the first monomodal distribution lying in the range from 0 to 500 nm and the maximum value of the second monomodal distribution lying in the range from 500 to 5000 nm.

8. Use of the dispersions according to Claims 6 or 7 or of a dispersion prepared according to any of Claims 1 to 5 for preparing particle-stabilized O/W emulsions (Pickering emulsions).

9. Use of the dispersions according to Claims 6 or 7 or of a dispersion prepared according to any of Claims 1 to 5 for improving the scratch resistance of surface coatings.

10. Use of the dispersions according to Claims 6 or 7 or of a dispersion prepared according to any of Claims 1 to 5 for improving the flow properties for preparations for use on surfaces.

11. Use of the dispersions according to Claims 6 or 7 or of a dispersion prepared according to any of Claims 1 to 5 for coating print media.

12. Surface coating, **characterized in that** it is comprised of a dispersion according to Claims 6 or 7 or a dispersion prepared according to any of Claims 1 to 5.

## Revendications

1. Procédé pour la préparation de dispersions aqueuses de silices pyrogènes non polaires hydrophobes, qui sont modifiées en surface, **caractérisé en ce que** les silices pyrogènes non polaires, qui sont modifiées en surface, sont incorporées par dispersion dans une phase aqueuse à un pH de 0 à 6 et dans une autre étape, la valeur du pH de la dispersion de silice est réglée à une valeur de pH de 7-12 par addition de base.

2. Procédé selon la revendication 1, **caractérisé en ce que** la dispersion a lieu à une température de 30°C à 90°C.

3. Procédé selon la revendication 1 ou 2, **caractérisé en ce que** la concentration en silice dans la dispersion acide est de 10% en poids à 60% en poids.

4. Procédé selon l'une ou plusieurs des revendications 1 à 3, **caractérisé en ce que** la dispersion acide est diluée avant le réglage de la valeur du pH à une valeur de 7 à 12.

5. Procédé selon l'une ou plusieurs des revendications 1 à 4, **caractérisé en ce que** le réglage de la valeur du pH a lieu en utilisant des forces de cisaillement les plus faibles possibles.

6. Dispersions aqueuses de silices pyrogènes non polaires hydrophobes, qui sont modifiées en surface, **caractérisées en ce que** la dispersion présente une valeur de pH de 7 à 12 et un indice de polydispersité inférieur à 0,5, l'indice de polydispersité étant obtenu à partir du quotient de la deuxième impulsion de l'analyse des cumulants de la fonction d'autocorrélation, divisée par la constante d'amortissement moyenne dans l'analyse des cumulants.

7. Dispersions aqueuses de silices pyrogènes non polaires hydrophobes, qui sont modifiées en surface, selon la revendication 6, **caractérisées en ce que** la répartition granulométrique de la dispersion présente au maximum deux répartitions monomodales isolées, la valeur maximale de la première répartition monomodale se situant dans la plage de 0 à 500 nm, la valeur maximale de la deuxième répartition monomodale se situant dans la plage de 500 à 5000 nm.

8. Utilisation des dispersions selon les revendications 6 ou 7 ou d'une dispersion préparée selon l'une quelconque des revendications 1 à 5 pour la préparation d'émulsions H/E à particules stabilisées (émulsions de Pickering).

9. Utilisation des dispersions selon les revendications 6 ou 7 ou d'une dispersion préparée selon l'une quelconque des revendications 1 à 5 pour améliorer la résistance aux griffes de revêtements de surface.

10. Utilisation des dispersions selon les revendications 6 ou 7 ou d'une dispersion préparée selon l'une quelconque des revendications 1 à 5 pour améliorer les propriétés d'écoulement de compositions destinées à être utilisées sur des surfaces.

11. Utilisation des dispersions selon la revendication 6 ou 7 ou d'une dispersion préparée selon l'une quelconque des revendications 1 à 5 pour le revêtement de supports d'impression.

12. Revêtement de surface, **caractérisé en ce qu'**il présente une dispersion selon la revendication 6 ou 7 ou préparée selon l'une quelconque des revendications 1 à 5.
